# EUROPÄISCHE PATENTANMELDUNG

(11) **EP 0 594 018 A1**
(43) Veröffentlichungstag der Anmeldung: **27.04.1994**
(21) Anmeldenummer: 93116399.2
(22) Anmeldetag: 09.10.1993
(51) Int. Cl.: B29C 47/92

(54) **Vorrichtung zum Extrudieren von Kunststoffprofilen**

(30) Priorität: 19.10.1992 DE 4235163
(71) Anmelder: FRIEDRICH THEYSOHN GmbH, D-32547 Bad Oeynhausen (DE)
(72) Erfinder: Klose, Reinhard, D-31737 Rinteln (DE); Krüger, Ernst, Dr., D-49124 Georgsmarienhütte (DE)
(74) Vertreter: Cohausz & Florack

(57) **Zusammenfassung**

Eine Vorrichtung zum Extrudieren von Kunststoffprofilen, insbesondere von Rohrprofilen R mit einem Extruder 1, einer einstellbaren Extruderdüse 2, mindestens einer Abkühlkammer 6a,6b einer Abziehvorrichtung 9 mit einstellbarer Abzugsgeschwindigkeit und mit einer in Förderrichtung V des Kunststoffprofils benachbart zu der Extruderdüse 2 angeordneten Meßeinrichtung 3 zur Erfassen der Profilgeometrie, die mit einer Regeleinrichtung 5 verbunden ist, welche der Meßwert M1 der Meßeinrichtung 5 mit einem ersten Sollwert S1 vergleicht und in Abhängigkeit des Ergebnisses dieses Vergleichs eine Stellgröße zur Steuerung der Extruderdüse 2 abgibt, soll unter Beibehaltung kurzer Regelzeiten dahingehend verbessert werden, daß eine Korrektur von Fehlern möglich ist, die während des Abkühlens und Erstarrens des Profiles entstehen. Diese Aufgabe wird erfindungsgemäß dadurch gelöst, daß der erste Sollwert S1 veränderbar ist, daß eine zweite, ebenfalls mit der Regeleinrichtung 5 verbundene Meßeinrichtung 7 zur Erfassung der Profilgeometrie in Förderrichtung V hinter der Abkühlkammer 6a,6b angeordnet ist und daß die Regeleinrichtung 5 in Abhängigkeit von dem Ergebnis des Vergleichs des von der zweiten Meßeinrichtung 7 abgegebenen Meßwerts M2 mit einem zweiten Sollwert S2 den ersten Sollwert S1 verändert.

## Beschreibung

Die Erfindung betrifft eine Vorrichtung zum Extrudieren von Kunststoffprofilen, insbesondere von Rohrprofilen mit einem Extruder, einer einstellbaren Extruderdüse, mindestens einer Abkühlkammer, eine Abziehvorrichtung und mit einer in Förderrichtung des Kunststoffprofils benachbart zu der Extruderdüse angeordneten Meßvorrichtung zur Erfassung der Profilgeometrie, die mit einer Regeleinrichtung verbunden ist, welche den Meßwert der Meßeinrichtung mit einem ersten Sollwert vergleicht und in Abhängigkeit des Ergebnisses dieses Vergleichs eine Stellgröße zur Steuerung der Extruderdüse abgibt.

Mit solchen aus der Praxis bekannten Vorrichtungen lassen sich insbesondere Rohrprofile von großem Querschnitt herstellen. Sie sind in der Regel mit beheizbaren Extrudierdüsen ausgestattet, die durch eine Regelung der Beheizung und eine Veränderung ihrer Öffnungsgeometrie während des Extrudierbetriebs eine Korrektur von Unregelmäßigkeiten der Profilgeometrie, wie beispielsweise der Wandstärke oder bei Rohrprofilen der Exzentrizität, ermöglichen. An die Extruderdüse schließen sich eine oder mehrere Kammern an, in denen die Rohre im Vakuum oder mit Stützluft im Rohrinneren abkühlen und erstarren.

Am Ende dieser Kammern werden die Rohre von einer Abziehvorrichtung, deren Abziehgeschwindigkeit zur Beeinflussung der Wandstärke des Profils regelbar ist, erfaßt und der Weiterverarbeitung zugeführt.

Um bei der Extrusion von Profilen entstehende Wanddicken- oder Durchmesserfehler möglichst frühzeitig korrigieren zu können, ist bei den aus der Praxis bekannten Vorrichtungen die Wanddicken- und Durchmesser-Meßeinrichtung in unmittelbarer Nähe der Extruderdüse angeordnet. Als Meßeinrichtungen werden dabei in der Regel Ultraschall-Sensoren eingesetzt. Die so ausgestattete Meßeinrichtung erfaßt die geometrischen Abmessungen des aus der Extruderdüse austretenden, noch weichen Rohres.

Der Vorteil dieser Anordnung liegt darin, daß es mit ihr möglich ist, die Reaktionszeit der Regeleinrichtung auf ein Minimum zu reduzieren. So ist es möglich, unmittelbar nach Feststellung einer Geometrieabweichung regelnd die Herstellung des Rohres zu beeinflussen. Nachteilig ist jedoch, daß die Wanddickenmessung an dem noch weichen Rohr vorgenommen wird. Auf diese Weise lassen sich Geometriefehler des Rohres, die erst während des Abkühlens entstehen, nicht erfassen.

Die Aufgabe der Erfindung besteht darin, bei einer Vorrichtung der eingangs genannten Art unter Beibehaltung kurzer Reaktionszeiten der Regeleinrichtung die Korrektur auch solcher Fehler zu ermöglichen, die während des Abkühlens und Erstarrens der Profile entstehen.

Diese Aufgabe wird erfindungsgemäß dadurch gelöst, daß der erste Sollwert veränderbar ist, daß eine zweite, ebenfalls mit der Regeleinrichtung verbundene Meßeinrichtung zur Erfassung der Profilgeometrie in Förderrichtung hinter der Abkühlkammer angeordnet ist und daß die Regeleinrichtung in Abhängigkeit von dem Ergebnis des Vergleichs des von der zweiten Meßeinrichtung abgegebenen Meßwertes mit einem zweiten Sollwert den ersten Sollwert verändert.

Gemäß der Erfindung wird die Geometrie des extrudierten Profiles an zwei verschiedenen, in Abzugsrichtung des Profils voneinander beabstandeten Orten der Vorrichtung gemessen. Dabei wird das erste Meßergebnis, wie beim Stand der Technik, in unmittelbarer Nähe der Extruderdüse gewonnen. Der Vergleich dieses Meßergebnisses mit einem Sollwert erlaubt ein erstes, schnelles Reagieren auf Fehler, die schon in der Extruderdüse entstanden sind.

Die zweite Meßeinrichtung ist wirkungslos, bis der Anfang eines neu extrudierten Profilstranges das Ende der Abkühlkammern erreicht hat. Von diesem Moment an werden auch die Endabmessungen des Profils durch eine zweite Messung kontinuierlich kontrolliert. Das Ergebnis dieser Messung wird ebenfalls an die Regeleinrichtung geleitet und dort mit einem zweiten Sollwert verglichen. In Abhängigkeit von dem Ergebnis dieses Vergleiche verändert die Regeleinrichtung den ersten Sollwert, mit dem der von der ersten Meßeinrichtung gelieferte Meßwert verglichen wird.

Der zweite Sollwert entspricht den geforderten Endabmessungen des Profiles. Das Ergebnis des Vergleichs des zweiten Meßwertes mit diesem Sollwert gibt somit Auskunft darüber, ob der Vergleich des ersten Meßwertes mit dem ersten Sollwert zur richtigen Einstellung der Extruderdüse geführt hat. Ist dies nicht der Fall, wird der erste Sollwert durch die Regeleinrichtung verändert, so daß auch das Ergebnis des Vergleichs des ersten Meßwertes mit diesem verändertem Sollwert anders ausfällt. Dies führt wiederum dazu, daß die Einstellung der Extruderdüse verändert wird. Dieser Regelvorgang wiederholt sich, bis das erstarrte Profil eine fehlerfreie Geometrie aufweist.

Besonders geeignet ist die erfindungsgemäße Vorrichtung für die Herstellung von Kunststoffrohren von großem Durchmesser und großer Wandstärke. Diese Rohre können nämlich nur mit sehr geringen Fördergeschwindigkeiten hergestellt werden, so daß zwischen dem Extrudieren eines Rohres und seinem Austritt aus der Abkühlkammer ein langer Zeitraum liegt. Gemäß der Erfindung besteht jedoch auch bei der Herstellung solcher Rohre zu jedem Zeitpunkt eine Kontrolle über alle Abmessungen des Rohres, die eine exakte Korrektur der Extruderdüse erlaubt.

Da das Herstellungsergebnis beim Extrudieren der Geometrie und der Temperatur der Extruderdüse auch durch die Abzugsgeschwindigkeit beeinflußt wird, sollte die Regeleinrichtung neben der Stellgröße zur Steuerung der Extruderdüse auch eine Stellgröße zur Steuerung der Abziehvorrichtung abgeben.

Für das Erfassen der Profilgometrie können Meßeinrichtungen mit feststehenden, reversierenden oder rotierenden Sensoren verwendet werden. Bei Verwendung von reversierenden oder rotierenden Sensoren hat sich eine Anzahl bis zu sechzehn Sensoren pro Meßeinrichtung bewährt.

Die Extruderdüse kann in mehrfacher Hinsicht einstellbar sein. So ist beispielsweise eine Regelung der Düsentemperatur oder eine Veränderung der Abmessung der Düsenöffnung denkbar. Möglich ist auch eine räumliche Verlagerung der Extruderdüse gegenüber dem Eingang der nachgeordneten Kühlkammer, derart, daß der Abstand zwischen der Extruderdüse und der Kühlkammer über den Querschnitt des Profils unterschiedlich ist. Das führt zu einer unterschiedlichen Reckung des extrudierten Profils und damit zu unterschiedlichen Wanddicken.

Ein besonders genaues Regelverhalten ergibt sich, wenn die Regeleinrichtung in Abhängigkeit von dem Ergebnis des Vergleichs des mittels eines Umrechnungsfaktors gewichteten Meßwertes der zweiten Meßeinrichtung mit dem zweiten Sollwert den ersten Sollwert verändert.

Der für die Vermessung des Profils notwendige Aufwand kann dadurch vermindert werden, daß die erste Meßeinrichtung die Wanddicke des Profils und die zweite Meßeinrichtung den Innen- und Außendurchmesser sowie die Wandicke des erstarrten Profiles erfaßt. In der Praxis haben sich bei einer solchen Ausgestaltung der Erfindung Vorrichtungen bewährt, bei denen die Wanddicke am ersten Meßort mittels feststehender Sensoren nahe der Extruderdüse vermessen wird, wogegen am zweiten Meßort mit Hilfe von reversierenden oder rotierenden Sensoren die Wanddicke und der Innen- und Außendurchmesser des erstarrten Rohres erfaßt werden.

Im folgenden wird die Erfindung anhand einer ein Ausführungsbeispiel darstellenden Zeichnung näher erläutert.

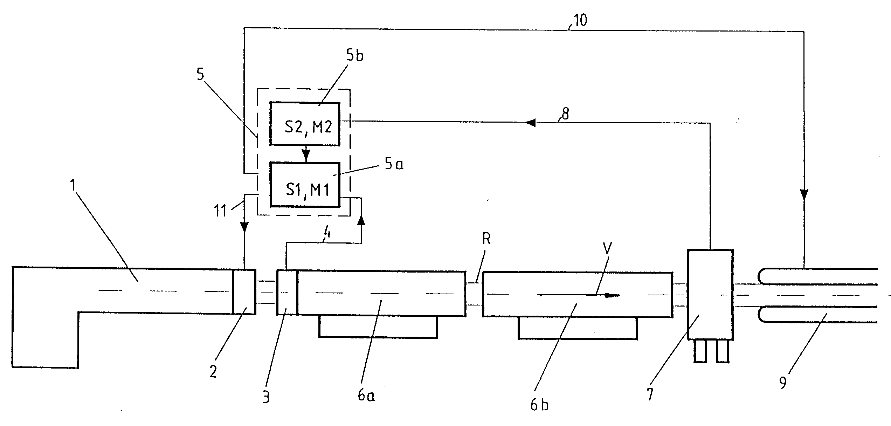

Die Zeichnung zeigt einen schematischen Aufbau einer erfindungsgemäßen Extrudiervorrichtung zur Herstellung eines Rohrprofiles R. Diese weist einen Extruder 1 mit einer Extruderdüse 2 auf, bei der die Abmessung der Düsenöffnung veränderbar ist. Darüber hinaus ist auch die Temperatur der Extrudierdüse 2 über deren Umfang einstellbar.

In Förderrichtung V des Rohrprofils R, unmittelbar benachbart zur Extruderdüse 2 ist eine erste Meßeinrichtung 3 angeordnet, die mit feststehenden Ultraschall-Sensoren zur Messung der Wandstärke des noch warmen, elastischen Rohrprofiles R ausgestattet ist. Die erste Meßeinrichtung 3 ist über Signalleitungen 4 mit einer ersten Vergleichsstufe 5a einer Regeleinrichtung 5 verbunden.

Die Meßeinrichtung 3 ist in unmittelbarer Nähe der Extruderdüse 2 am Eingang einer Abkühlkammer 6a angeordnet. In dieser und einer unmittelbar dahinter angeordneten zweiten Abkühlkammer 6b erstarrt das Rohrprofil R unter Vakuum oder Stützluft im Rohrinnern. Hinter dem Ausgang der Abkühlkammer 6 ist eine zweite Meßeinrichtung 7 angeordnet, die mit rotierenden und reversierenden Ultraschall-Sensoren zur Messung des Innen- und Außendurchmessers sowie zur Erfassung der Wandstärke des erstarrten Rohrprofiles R bestückt ist. Die Meßeinrichtung 7 ist über Signalleitungen 8 mit einer zweiten Vergleichsstufe 5b der Regeleinheit 5 verbunden.

Auf die Meßeinrichtung 7 folgt in Förderrichtung V eine Abziehvorrichtung 9, durch die das erstarrte Rohrprofil R weitergefördert wird. Die Abzugsgeschwindigkeit der Abziehvorrichtung 9 ist einstellbar. Zu diesem Zweck ist die Abziehvorrichtung 9 über Steuerleitungen 10 mit der Regeleinheit 5 verbunden. Genauso ist die Extruderdüse 2 über Steuerleitungen 11 an die Regeleinrichtung 5 angekoppelt.

Die Meßwerte M1 der Meßeinrichtung 3 werden in der ersten Vergleichsstufe 5a der Regeleinrichtung 5 mit einem veränderbaren Sollwert S1 verglichen. In Abhängigkeit von dem Vergleichsergebnis gibt die Vergleichsstufe 5a Stellgrößen zur Veränderung der Temperatur der Extruderdüse 2, der Größe der Öffnung der Extruderdüse 2, der relativen räumlichen Lage der Extruderdüse 2 zum Eingang der Kühlkammer 6a (z.B. exzentrische Zuordnung), der Drehzahl der Extruderschnecke oder der Abzugsgeschwindigkeiten der Abziehvorrichtung 9 ab.

Sobald der Anfang des Rohrprofiles R die zweite Meßeinrichtung 7 erreicht hat, werden auch dort kontinuierlich die Endabmessungen des Rohrinnen- und Außendurchmessers erfaßt. Die entsprechenden Meßwerte M2 werden in der zweiten Vergleichsstufe 5b mit einem fest vorgegebenen Sollwert S2 verglichen. Wird bei diesem Vergleich eine unzulässige Abweichung festgestellt, so wird der Sollwert S1 der ersten Vergleichsstufe 5a entsprechend verändert. Diese Änderung führt zu einer Abweichung des Vergleichsergebnisses der ersten Vergleichsstufe 5a, so daß die Regeleinrichtung 5 Stellgrößen zur Veränderung des Betriebszustandes von Extruderdüse 2 und/oder der Extruderschnecke und/oder der Abzieheinrichtung 9 abgibt.

## Patentansprüche

1. Vorrichtung zum Extrudieren von Kunststoffprofilen, insbesondere von Rohrprofilen (R) mit einem Extruder (1), einer einstellbaren Extruderdüse (2), mindestens einer Abkühlkammer (6a,6b) einer Abziehvorrichtung (9) insbesondere mit einstellbarer Abzugsgeschwindigkeit und mit einer in Förderrichtung (V) des Kunststoffprofils benachbart zu der Extruderdüse (2) angeordneten Meßeinrichtung (3) zur Erfassen der Profilgeometrie, die mit einer Regeleinrichtung (5) verbunden ist, welche den Meßwert (M1) der Meßeinrichtung (3) mit einem ersten Sollwert (S1) vergleicht und in Abhängigkeit des Ergebnisses dieses Vergleichs eine Stellgröße zur Steuerung der Extruderdüse (2) abgibt,
**dadurch gekennzeichnet,**
- daß der erste Sollwert (S1) veränderbar ist,
- daß eine zweite, ebenfalls mit der Regeleinrichtung (5) verbundene Meßeinrichtung (7) zur Erfassung der Profilgeometrie in Förderrichtung (V) hinter der Abkühlkammer (6a,6b) angeordnet ist und
- daß die Regeleinrichtung (5) in Abhängigkeit von dem Ergebnis des Vergleichs des von der zweiten Meßeinrichtung (7) abgegebenen Meßwerts (M2) mit einem zweiten Sollwert (S2) den ersten Sollwert (S1) verändert.

2. Vorrichtung nach Anspruch 1,
**dadurch gekennzeichnet,** daß die Temperatur der Extruderdüse (2) regelbar ist.

3. Vorrichtung nach Anspruch 1 oder 2,
**dadurch gekennzeichnet,** daß die Abmessung der Öffnung der Extruderdüse (2) regelbar ist.

4. Vorrichtung nach einem der Ansprüche 1 bis 3,
**dadurch gekennzeichnet,** daß die räumliche Lage der Extruderdüse (2) relativ zum Eingang der Kühlkammer (6a) regelbar ist.

5. Vorrichtung nach einem der Ansprüche 1 bis 4,
**dadurch gekennzeichnet,** daß die Regeleinrichtung (5) eine Stellgröße zur Steuerung der Abziehvorrichtung (9) abgibt.

6. Vorrichtung nach einem der Ansprüche 1 bis 5,
**dadurch gekennzeichnet,** daß die Schneckendrehzahl des Extruders (1) regelbar ist.

7. Vorrichtung nach einem der Ansprüche 1 bis 6,
**dadurch gekennzeichnet,** daß die Regeleinrichtung (5) in Abhängigkeit von dem Ergebnis des Vergleichs des mittels eines Umrechnungsfaktors gewichteten Meßwertes (M2) der zweiten Meßeinrichtung (7) mit dem zweiten Sollwert (S2) den ersten Sollwert (S1) verändert.

8. Vorrichtung nach einem der Ansprüche 1 bis 7,
**dadurch gekennzeichnet,** daß die erste Meßeinrichtung (3) die Wanddicke des Profiles und die zweite Meßeinrichtung (7) den Innen- und Außendurchmesser sowie die Wanddicke des Profiles erfaßt.

9. Vorrichtung nach einem der Ansprüche 1 bis 8, **dadurch gekennzeichnet,** daß mindestens eine der Meßeinrichtungen (3,7) feststehende Sensoren aufweist.

10. Vorrichtung nach einem der Ansprüche 1 bis 9,
**dadurch gekennzeichnet,** daß mindestens eine der Meßeinrichtungen (3,7) mit reversierenden oder rotierenden Sensoren bestückt ist.

11. Vorrichtung nach Anspruch 10,
**dadurch gekennzeichnet,** daß die Meßeinrichtung (7) bis zu sechzehn reversierende oder rotierende Sensoren aufweist.
